# Europäisches Patentamt

# European Patent Office

# Office européen des brevets

(11) Publication number: **0 087 204**
**B1**

## (12) EUROPEAN PATENT SPECIFICATION

(45) Date of publication of patent specification: **03.08.88**

(51) Int. Cl.⁴: **C 08 L 23/06**

(21) Application number: **83200252.1**

(22) Date of filing: **18.02.83**

(54) **Polymer powder compositions, particularly polyethylene powder compositions, and objects to be made and made thereof.**

(30) Priority: **20.02.82 NL 8200688**
**24.04.82 NL 8201711**

(43) Date of publication of application:
**31.08.83 Bulletin 83/35**

(45) Publication of the grant of the patent:
**03.08.88 Bulletin 88/31**

(84) Designated Contracting States:
**AT BE CH DE FR GB IT LI NL SE**

(56) References cited:
**EP-A-0 021 533**
**EP-A-0 047 039**
**CA-A- 983 226**
**GB-A-2 058 092**
**US-A-4 115 499**
**US-A-4 238 537**

(73) Proprietor: **STAMICARBON B.V.**
**Mijnweg 1**
**NL-6167 AC Geleen (NL)**

(72) Inventor: **Schrijver, Jan**
**Steenakker 40**
**NL-6116 CN Roosteren (NL)**
Inventor: **Vossebeld, Arnold**
**Burg. Janssenstraat 84**
**NL-6191 JD Beek (NL)**

Courier Press, Leamington Spa, England.

## Description

The invention relates to compositions of polyethylene powders, consisting essentially of 20—99.5% wt of a polyethylene powder component A and 0.5—80% wt of a polyethylene powder component B, and to a process for making objects thereof.

Such compositions of polyolefin powders are known from US—A—79.05060. One component is stabilized polyethylene, the other component is non-stabilized or hardly stabilized polyethylene. These compositions are used for the coating of metal surfaces, in which process the adhesion to the substrate is improved by the presence of unstabilized polymer, while on the other hand the resistance of the surface layer against oxidation and other weathering influences is not or hardly affected. These compositions are mainly used for the coating of pipes for the transport of gas and oil, which pipes are laid in the earth. Weathering influences, such as oxidation and UV, are less strong there than in the case of objects exposed to atmospheric conditions. For the coating objects that are exposed to outdoor weathering conditions the compositions of NL—A—79.05060 are less suitable.

It is known how to make plastic objects by heating powders in a mould that can rotate about one axis but mostly rotates and/or oscillates about at least two axes. The powder melts against the hot wall and forms a melted layer against the entire inner wall of the mould. After cooling a hollow object is obtained. This is a process known per se, the so-called rotational moulding process. Inside the layer thus formed one or more other layers can be applied, for instance of material having properties different from those of the outer layer (lying against the wall of the mould). The hollow object can be filled up also with polymer foam as in the production of surf boards. Such a foam must adhere to the inner wall of the hollow object made by rotational moulding.

Particularly in the processing of polyethylene, but also of polypropylene the adhesion of e.g. foamed polyurethan thereto is quite unsatisfactory. This is an acute problem in producing e.g. surf boards or wind surfboards by rotational moulding a polyolefinic particularly a polyethylenic wall, more particularly a wall from high or medium density polyethylene i.e. a polyethylene having a density of at least 930 kg/m³, though said wall can also be made from a polyethylene having a lower density. In the hollow article, consisting of the rotationally moulded polyethylene wall, polyurethan is foamed to fill the space confined by said polyethylene wall.

In use however, the polymer wall may be damaged, and water may penetrate into the foam. However, when there is good adhesion between tha wall and the foam the polyethylene wall is less easily damaged. Moreover when in such circumstances the outer wall is damaged, water can penetrate into the foam only in an area immediately under the damaged portion of the wall. If the wall-foamed core adhesion is poor, then water may spread between the wall and foam and just be absorbed throughout the object. Good adhesion is thus highly desirable for in particular (wind) surf boards as well as for other objects built up from similar components.

So, on the one side, the should adhere well to the wall, on the other side the wall should release easily from the mould, so that the wall does not become damaged.

There are other uses of hollow articles made by rotational moulding wherein the properties of the material of the inner surface of the hollow wall should differ from the properties of the material of the outer surfaces. Such a condition may also be imposed when the requirements for the wall of the hollow article cannot be met by one material. One can fulfil such conditions by making the hollow article from two or more layers constituting the wall of the hollow article. Such articles are made in a two shot rotational moulding process, moulding first an outer layer, adding into the mould a second charge of polymer powder and moulding an inner layer. Thus a hollow moulded object can be made with, for instance, outer and inner surfaces having different colours, but also with, for instance, an outer layer showing good resistance to atmospheric influences, but without being quite impermeable to organic liquids, and an inner layer less resistant to atmospheric influences but more impermeable to organic liquids. Also the outer layer may be well stabilized, and the inner layer may show little or no stabilization. The outer layer then shows good resistance to atmospheric influences, and in the rotational moulding process, too, hardly any or no oxidation occurs. This layer will then easily release from the mould. The inner layer which is not sufficiently stabilized, is slightly oxidized in the rotational moulding process (the mould mostly contains air). When the hollow moulded object is being filled with plastic foam, the latter is now found to adhere much better to a slightly oxidized inner layer.

The making of two layers in two operations is a laborious process.

The compositions of the NL—A—79,05060 are ill-suited for the production of moulded objects that are to be filled up with foam, such as for instance windsurf boards. The adhesion to the foam is unsatisfactory, and the release of the moulded object from the mould has been found to be extremly difficult, and release agents must be applied very frequently, which is found, moreover, not be reliable means and in a number of cases does not produce the desired results. Such a problem cannot arise, of course, in the coating of pipes, no layer being applied in that process against the inner wall of a moulded object.

In the US—A—3,639,189 it has been proposed to improve the adhesion of polyethylene to metal substrates by blending the polyethylene with oxidized polyethylene. The oxidized polyethylene is obtained by heating polyethylene in an oxygen atmosphere at temperatures that may range from 90°C to the crystalline melting point, until the desired oxidation has been reached. The molten polyethylene is then blended with the molten oxidized polyethylene and said blend is subsequently granulated. The granulate is used as starting material for the layers to be applied to metal. The oxidation of polyethylene is laborious and has a cost-raising effect on the composition to be used as starting material. For the production of, for instance, windsurf boards such a composition is less suitable, because oxidized polyethylene reduces the resistance of the polyethylene composition to atmospheric influences. Particularly the resistance to thermal and oxidative attack is reduced, which is very undesirable particularly for an outer wall such as the polyethylene skin of a windsurf board, which is exposed to outdoor atmospheric influences. It is true that this disadvantage might be combated by incorporating more stabilizing agents in the polyethylene composition, but this again has a cost-raising effect. The use of compositions containing oxidized polyethylene in the production of objects in a die or mould by, for instance, rotational moulding has the additional objection that such compositions also adhere to the mould. Even when non-oxidized polyethylene is used, release agents must be applied in order to improve the release of the moulded object from the mould, but when oxidized polyethylene is used, difficulties are found yet to arise, despite the use of release agents, in the removal from the mould.

It has now been found that moulded objects whose outer surfaces and inner surfaces have different properties can now be made in one step by rotational moulding by using a polyethylene composition consisting of 20—99.5% by weight of a powdered polyethylene component A and 0.5—80% by weight of a powdered polyethylene component B, in which composition—and this characterizes the invention—the average particle size of the powdered polyethylene component A is at least 0,050 mm and at most 0,250 mm, the average particle size of component A is at least 0,050 mm smaller than the average particle size of component B, and component B has an average particle size of at most 1 mm, component B containing no or at most less than 0.01 wt. % stabilizer and component A being stabilized. In the rotational moulding process segregation of the powdered polymer composition is now found to occur. The outer wall is formed almost exclusively from component A, the inside almost exclusively from component B. An examination of a cross section of the wall of the moulded object shows that between outer and inner surfaces a transition occurs from almost exclusively component A to almost exclusively component B.

As explained hereinafter, the inventive idea is the difference in particle size between the two components, so that during the heating in a mould to beyond the melting point segregation will occur.

In rotational moulding the mould is heated to beyond the melting point of the plastic, and the slow, rotating and/or oscillating movements take care that the polymer powder is evenly spread over the surface of the mould. By putting the same of another plastic or plastic composition in the mould a number of layers can be formed if so desired. The space within the plastic wall formed from one or more layers against the wall of the mould can be filled up with foam, for instance with polyurethan foam. The foam must adhere to the inner layer of the plastic wall but the whole must release easily from the mould. The compositions according to the invention meet these requirements.

Polyethylene is generally marketed in the form of pellets. For uses like rotational moulding, however, it must be in granular form. Generally, the particle size of rotational moulding powders is smaller than 1 mm. More specifically, the average particle size has a value of 0.5—1 mm, though it may even be somewhat smaller. A particle size smaller than about 0.3 mm is generally not used. Rotational moulding powders are mostly obtained by grinding pellets. It is true that manufacture of polyethylene by a slurry process or a gas phase process gives granular ethylene polymers, but the morphological and rheological properties of such powders are generally poor. They are therefore pelletized and subsequently ground. The present composition consists of a finer component A having an average particle size of 0.050 mm to 0.250 mm, such that it is at least 0.050 mm smaller than the average particle size of the coarser component B.

The average particle size is determined by sieve analysis in a manner known per se. The results of the sieve analysis can be represented graphically in a so-called Rosin-Rammler diagram; as described in, for example DIN 66145. The point on the line corresponding with a sieve residue of 36.8% gives the average particle size. The slope of the line is a measure for the width of the particle size distribution. The particle size distribution is narrower as the slope increases. It is characterized by the factor of uniformity n. The greater n, the more uniform the powder and the narrow the particle size distribution.

For the compositions according to the invention the particle size distribution is of some importance. With a wide particle size distribution and a limited difference in particle size between components A en B, fractions at the bottom of the particle size distribution of component B may penetrate far into the particle size distribution field of the component.

Though not to be regarded as a statement binding the applicant, it is assumed that in the heating of the mould for the rotational moulding of the present compositions the smallest particles are the most rapid to be heated and are the first to melt, because per unit of surface area they have a far smaller mass content than coarser particles. The transfer of heat is proportional to the surface area, but the amount of melting heat is proportional to the mass. On this ground it might indeed be assumed that the smallest particles are the first to melt. It was extremely surprising, however, that in this process a very distinct segregation of the coarse and fine particles was obtained. As they are the first to melt, the fine particles will form an outer layer i.e. surface-wall against the interior surface of the mould wall, and after that the coarser particles begin to melt and will form the inside part or layer of the wall of the object to be made. As the smaller particles are the first to melt an outer layer is obtained consisting wholly or largely of the fine component. The coarser particles will not melt until later and will thus come on the inside of the skin or wall to be formed.

The processing of polyethylene, particularly of high-density polyethylene, takes place at temperatures above 140°C, and for this reason the granulate is stabilized against thermal decomposition. The polyethylene is stabilised also against oxidative attack and against the influence of light, particularly of UV, in order that objects made of the polyethylene will have good resistance against atmospheric influences. Stabilization against oxidative modification is required also to prevent rapid attack when the polymer comes into contact with oxygen, for instance atmospheric oxygen, during the processing. After the polymerization of ethylene, small quantities of stabilizing agents against thermal and oxidative modification are often added to protect the polymer while it is being worked up further. Then, in the granulation at the end of the working-up process further quantities of stabilizing agents are added. If this last-mentioned addition is not made, a non-stabilized ore hardly stabilized polyethylene will be obtained containing in any case less than 0.01% wt, more specifically less than 0.005% wt, stabilizing agents.

If such a non-stabilized or hardly stabilized polyethylene is used for making objects in a die or in a mould, for instance by rotational moulding, oxidative conversions will occur at those places where, at elevated temperatures, the polyethylene comes into contact with air. The mould mostly contains air, and during the heating of the mould a noticeable oxidative conversion of the polyethylene will then take place, such as oxidation, with or without chain breakage, cross-linking, etc. Thus the adhesive properties of the polyethylene will improve.

As a result of the presence of stabilizing agents, there will be no or hardly any perceptible oxidation of the polyethylene under the processing conditions. It is supposed that when a stabilized and an unstabilized polyethylene is used as finer component A resp. coarser component B, an in the rotationally moulded hollow form polyurethan is foamed, the adherance of the inner surface of the polyethylene form is due to oxidized groups in the polyethylene. Such oxidized groups are capable of being formed during the processing in the non-stabilized or hardly stabilized component. This can easily be demonstrated through infrared analysis. In order to establish the above beyond any doubt, a layer can be formed, under the intended processing conditions, of each component separately and an infrared analysis can be made thereof. The non-stabilized or hardly stabilized polyethylene will then show a clearly perceptible band at 1650—1800 cm$^{-1}$ which is indicative of C=0 bonds. In the stabilized polyethylene such a band is not or hardly perceptible.

If polyurethan is foamed into a hollow form made by rotational moulding of a non-stabilized or hardly stabilized polyethylene, the adhesion turns out to be so strong that breaking will occur in the foam and not on the surface when efforts are made to pull the polyethylene loose from the polyurethan foam. A non-stabilized or hardly stabilized polyethylene now does have good adhesion to the polyurethan foam or to other substrates, but firstly such a layer has insufficient resistance against atmospheric influences, and objects made thereof will weather in an unacceptably short period of time, and secondly such a layer will adhere also to the wall of the mould. It has been found that, despite the use of release agents, it is difficult to take the wall from the mould.

An infrared study of a layer made by rotational moulding of a composition according to the invention, of which composition component A was well stablized and component B hardly stabilized, revealed that the presence of C=0 groups on the inside of the wall was quite distinct. This is apparent from the occurrence of a band at 1650—1800 cm$^{-1}$, whereas the outside of the wall showed no band at 1650—1800 cm$^{-1}$. From this it may be concluded that the inside of the wall is oxidized, whereas on the outside of the wall there can be at most negligible oxidation. Some oxidation of the outer surface cannot always be excluded. In some cases a very weak band at 1650—1800 cm$^{-1}$ will then be observed. Though some oxidation is permissible, it should be limited as far as possible.

In the rotational moulding of such a composition the oxidation must now on the one side be such as to provide proper adhesion to the foam to be applied inside the moulding object, but on the other side the oxidation must not be such as to present difficulties in the release from the mould and/or problems in the stabilization. This must be taken into account in determining the quantity of unstabilized component. Less than 1% wt will hardly produce any effect and more than 99% wt is undesirable, too. Preferably such compositions contain 10—30% wt non-stabilized or hardly stabilized polyethylene. The processing of a stabilized and non-stabilized component is mentioned here by way of example. It will be clear that there are many other modes of realization that come within the scope of the invention.

Each component in the compositions according to the invention can be composed also of two or more polyolefins. For polyethylene compositions both low and high-density polyethylene may be started from, but generally preference is given to polyethylene having a density of at least 0.930.

The polymer components in the present compositions need not necessarily differ from each other only in particle size. Different grades of the same polymer can be used as well, for instance polyethylene grades having different melt indices, but different kinds can be used also, for instance an ethylene homopolymer and an ethylene copolymer, low and high-density polyethylene. Such different kinds generally also have different melting points. In rotational moulding the kind of polymer having the lowest melting point will generally be the first to melt. Hence, if for the fine and for the coarse component polymers are used having different melting points, the fine component should preferably consist of the polymer having the lowest melting point. Preferably the coarse component B in the present compositions is a polymer having a crystalline melting point which is at least 1°C higher than that of the fine component A.

The compositions according to the invention and particularly the components which they are composed of may contain usual additives such as colourants, fillers, etc.

The relative quantities of the components must enable to realize the desired properties. Less than 1% by weight of one of the components does generally hardly show any effect of said minor component. With amounts slightly over 1% the effect is generally rather limited. So the compositions contain preferably at least 10% and more preferably at least 25% by weight of the minor component.

The invention is further elucidated by the following examples.

Example I

Powdered polyethylene coloured red by kneading in 0.5% wt iron oxide red 130 B is mixed with powdered polyethylene coloured yellow by kneading in 0.5% wt cadimum yellow 1080.

The red polyethylene has a melt index (ASTM D-1238 condition E) 4.5 and a density of 0.941. 20% wt of the powder has a particle size of 0.3—0.4 mm, 70% of 0.4—0.5 mm and 10% is larger than 0.5 mm.

The yellow polyethylene is of the same grade as the red polyethylene. The particle size of the powder is: 10% wt smaller than 0.125 mm, 30% wt from 0.125 to 0.175 mm and 60% wt from 0.175 to 0.25 mm.

Mixtures are prepared having 70 parts by weight red and 30 parts by weight yellow polyethylene and having 30 parts by weight red and 70 parts by weight yellow polyethylene.

By rotational moulding a hollow object is now made of these mixtures. The oven temperature is 275°C. The period of rotation was 16 minutes, the wall thickness of the moulding being 3 mm.

The wall formed is yellow on the outside with only a few hardly perceptible red spots. The inside is red with only a few hardly perceptible yellow spots. In cutting the wall and observing the cross sections it is found that the separation is so good that the differences in composition of the two mixtures cannot be seen on the surfaces. The cross sections do show that one composition contains far more red polyethylene than the other.

The colouring of the two components with two contrasting colours was meant in this example only to enable the segregation in the components during the rotational moulding process to be easily visualized.

Example II

Polyethylene powder coloured red by kneading in 0.5 wt % iron oxide red 130 B is mixed with polyethylene powder coloured yellow by kneading in 0.5% wt cadmium yellow 1080.

The red polyethylene has a melt index (ASTM D-1238 condition E) 4.5 and a density of 0.941. It contains only 0.004% wt octadecyl-3-(3.5-di-tert-.butyl-4-hydroxyphenyl)propionate. 20% wt of the powder has a particle size of 0.3—0.4 mm, 70% of 0.4—0.5 mm and 10% is larger than 0.5 mm.

The yellow polyethylene is of the same grade as the red polyethylene, but is stabilized with 0.25% wt 2-hydroxy-4-n-octoxybenzophenone and 0.05% wt octadecyl-3-(3.5-di-tert.butyl-4-hydroxyphenyl)propionate. The particle size of the powder is: 10 wt % smaller than 0.125 mm, 30 % wt from 0.125 to .175 mm and 60 % wt from 0.175 to 0.25 mm.

Mixtures are prepared with 70 parts by weight of red and 30 parts by weight of yellow polyethylene and with 30 parts by weight of red an 70 parts by weight of yellow polyethylene.

By rotational moulding a hollow object is made from these mixtures. The oven temperature is set at 275°C. The period of rotation was 16 minutes, and the wall thickness of the mould 3 mm. Release from the mould is easy.

Next, polyurethan was foamed in the hollow wall. Subsequently, cross sections having a surface area of 5×6 cm are cut from the object so that blocks of polyurethan foam are obtained which are on two sides covered with a polyethylene skin. These blocks are subjected to a tensile test with a drawing speed of 1 cm/min.

The adhesive force of the polyethylene to the polyurethan foam could not be determined due to rupture in the foam at a stress of 0.260 $N/mm^2$. Consequently the adhesive force must be at least 0.260 $N/mm^2$.

Comparative example A

Example I was repeated, but now both the red polyethylene and the yellow polyethylene contains only 0.004% wt octadecyl-3-(3.5-di-tert-.butyl-4-hydroxyphenyl)propionate.

Release from the mould is difficult.

The adhesive force of the polyethylene to the polyurethane cannot be established because rupture occurs in the polyurethane foam, but is at least 0.260 $N/mm^2$.

Comparative example B

Example II was repeated, but now the particle size and the particle size distribution of the red polyethylene are the same as those of the yellow polyethylene.

Upon cutting of the wall and examination of the cross sections it is found that no separation of the red and the yellow polyethylene has taken place.

Release from the mould is difficult.

The determination of the adhesive force presented problems because the polyethylene skin started to come off already when the polyurethan blocks were fixed in the clamps of the tensile strength tester. Upon drawing, the polyethylene came loose from the foam already before a measurable value could be measured. The plane of partition was clean, without any polyurethan foam adhering to the polyethylene.

Comparative example C

Example II was repeated. Of the yellow stabilized polyethylene 5% wt has a particle size <250 µm, 20% wt a particle size of 250—300 µm, 45% wt a particle size of 300—400 µm, 25% wt a particle size of 400—450 µm and 5% a particle size of 450—500 µm.

Release from the mould was less easy than in Example II.

The adhesive force of the polyethylene to the polyurethan foam is 0.10 N/mm².

## Claims

1. Powdered polyethylene composition consisting essentially of 20—99,5 wt % of a powdered polyethylene component A and of 0,5—80 wt % of a powdered polyethylene component B, characterized in that the average particle size of component A is at least 0,050 mm and at most 0,250 mm, the average particle size of component A is at least 0,050 mm smaller than the average particle size of component B, and component B has an average particle size of at most 1 mm, component B containing no or at most less than 0,01 wt % stabilizer and component A being stabilized

2. Process for making a hollow object by rotational moulding of a powdered polyethylene composition, characterized in that a powdered polyethylene composition according to claim 1 is applied.

## Patentansprüche

1. Polyethylenzusammensetzung, bestehend aus 20—99,5 Gew.-% einer pulverförmigen Polyethylenkomponente A und 0,5—80 Gew.-% einer pulverförmigen Polyethylenkomponente B, dadurch gekennzeichnet, daß die durchschnittliche Teilchengröße der Komponente A wenigstens 0,050 mm und höchstens 0,250 mm beträgt, die durchschnittliche Teilchengröße der Komponente A wenigstens 0,050 mm kleiner ist als die durchschnittliche Teilchengröße der Komponente B, und die Komponente B eine Teilchengröße von höchstens 1 mm besitzt und die Komponente B keinen oder höchstens weniger als 0,01 Gew.-% Stabilisator enthält und die Komponente A stabilisiert ist.

2. Verfahren zur Herstellung eines Hohlgegenstandes durch Schleuderguß einer pulverförmigen Polyethylenzusammensetzung, dadurch gekennzeichnet, daß eine pulverförmige Polyethylenzusammensetzung gemäß Anspruch 1 angewendet wird.

## Revendications

1. Composition pulvérulente de polyéthylène consistant essentiellement en 20 à 99,5% en poids d'un composant de polyéthylène pulvérulent A et 0,5 à 80% en poids d'un composant pulvérulent de polyéthylène B, caractérisée en ce que la grosseur moyenne des particules du composant A est d'au moins 0,050 mm et au plus 0,250 mm, la grosseur moyenne des particules du composant A est inférieure d'au moins 0,050 mm à la grosseur moyenne des particules du composant B et le composant B a une grosseur moyenne de particules d'au plus 1 mm, le composant B ne contenant pas ou ne contenant pas plus de 0,01% en poids de stabilisant et le composant A étant stabilisé.

2. Procédé de fabrication d'un objet creux par moulage rotatif d'une composition pulvérulente de polyéthylène, caractérisé en ce qu'on applique une composition pulvérulente de polyéthylène selon la revendication 1.